# EUROPÄISCHE PATENTANMELDUNG

(11) **EP 4 600 001 A1**
(43) Veröffentlichungstag der Anmeldung: **13.08.2025**
(21) Anmeldenummer: 25151760.3
(22) Anmeldetag: 14.01.2025
(51) Int. Cl.: B25J 21/00

(54) **TRANSFERSYSTEM ZUR VERWENDUNG IN EINEM PHARMAZEUTISCHEN BARRIERESYSTEM, INSBESONDERE EINEM ISOLATOR, BETA-KOMPONENTE ZUR VERWENDUNG IN EINEM TRANSFERSYSTEM, BARRIERESYSTEM, INSBESONDERE ISOLATOR UND PRODUKTIONSANLAGE**

(30) Priorität: 08.02.2024 DE 102024103510
(71) Anmelder: Syntegon Technology GmbH, 71332 Waiblingen (DE)
(72) Erfinder: Harenberg, Melanie, 74523 Schwäbisch Hall (DE); Klemm, Christopher, 91589 Aurach (DE); Schwandt, Matthias, 74599 Wallhausen (DE); Heinz, Markus, 74831 Gundelsheim (DE); Kühnle, Albrecht, 74564 Crailsheim (DE); Sigwart, Bernd, 74564 Crailsheim (DE); Dietrich, Michael, 74632 Neuenstein (DE); Rottler, Matthias, 91731 Langfurth (DE)
(74) Vertreter: DREISS Patentanwälte PartG mbB

(57) **Zusammenfassung**

Die Erfindung betrifft ein Transfersystem (1) zur Verwendung in einem Barrieresystem (2) sowie eine Beta-Komponente (8) zur Verwendung in einem Transfersystem (1) und ein Barrieresystem (2) und eine Produktionsanlage (3).

## Beschreibung

Bei in der Pharmaindustrie eingesetzten Produktionsanlagen ist es regelmäßig von Bedeutung, dass im Verlauf eines Produktionsprozesses eine sterile Handhabung der entsprechenden Produkte gewährleistet ist. Hochpotente Pharmazeutika haben besonders hohe Anforderungen an die Abtrennung von der Umgebung.

Zu diesem Zweck weisen entsprechende Produktionsanlagen typischerweise ein Barrieresystem auf. Ein Barrieresystem in diesem Sinne kann ein sogenannter Isolator mit einem von der Umgebung hermetisch getrennten und abgeschlossenen Isolationsbereich sein. Unter den Begriff Barrieresystem fallen vorliegend jedoch auch RABS Systeme (Restricted Access Barrier Systeme). Der abgetrennte Bereich eines RABS Systems wird im Folgenden ebenfalls als Isolationsbereich bezeichnet.

Ein RABS System stellt eine physische Barriere zwischen einem Produktionsbereich und seiner Bedienerumgebung dar. Der Produktionsbereich wird durch eine spezielle Maschinenbeschutzung bestehend aus Maschinengehäuse, sicher verriegelte Türen und bspw. Eingriffen mit Handschuhen geschützt. Je nach Art der Belüftung können RABS Systeme in aktive und passive Systeme unterteilt werden. Aktive RABS Systeme sind mit speziellen Lüftungsanlagen ausgestattet, während passive RABS Systeme an der bestehenden Reinraumdecke des umgebenden B-Raums angeschlossen werden. Sie stellen eine attraktive Option für bestehende Reinräume zur Verbesserung der Produktionsqualität und für Anwendungen mit höheren Flexibilitätsanforderungen dar. Bei sachgemäßem Betrieb als integriertes System kann die RABS-Technologie die mikrobiologische Qualität eines Isolators erreichen.

Ein Isolator wiederum ist ein vollständig geschlossenes System mit einer vollständigen Trennung von Bediener und Prozessbereich bzw. Isolationsbereich. Pharmazeutische Isolatoren sind typischerweise mit einem vollständig reproduzierbaren und validierbaren System zur Biodekontamination (meist H2O2) und einer zugehörigen Prozesslüftungstechnik ausgestattet, die eine Temperaturregelung durch Heizen oder Kühlen sowie eine permanente Überdruckregelung des Prozessbereichs gegenüber der Bedienerumgebung gewährleisten kann, um das Eindringen von kontaminierter Luft zu vermeiden. Wenn das Entweichen von bspw. Wirkstoffen verhindert werden soll, so wird der Isolator typischerweise im Unterdruck betrieben.

Der Isolationsbereich bzw. bildet eine geschlossene Umgebung mit einer eigenen Atmosphäre, die speziellen Anforderungen an Reinheit und Freiheit von Kontaminationen genügt und auch einen Austritt von bspw. hochpotenten pharmazeutischen Wirkstoffen in die Umgebung unterbindet. In anderen Worten bildet das Barrieresystem bzw. der Isolator oder das RABS System einen von der Umgebung getrennten Bereich aus, in welchem eine sterile und abgeschlossene Handhabung der Produkte ermöglicht ist. Geschlossen in diesem Sinne bedeutet, eine insbesondere hermetische Trennung, die zum einen den Eintrag von Kontaminationen verhindert und zum anderen einen Austritt von Stoffen bzw. Produkten (bspw. pharmazeutischen Wirkstoffen) in dem Isolator ausschließt.

Der Isolationsbereich ist zumindest durch eine Trennwand von einem außerhalb des Barrieresystems befindlichen Bedienbereich getrennt, in welchem sich Bedienpersonal aufhalten kann. Das Trennelement ist dabei typischerweise Teil des Gehäuses, das den Isolationsbereich umgibt. Vom Bedienbereich aus kann Personal bspw. über fernsteuerbare Handhabungseinrichtungen und/oder Handschuheingriffe Produkte und Gegenstände im Barrieresystem (Isolator oder RABS System) manipulieren.

Um unter Gewährleistung der Trennung von Isolationsbereich und Umgebung ein Einbringen von Gegenständen aus dem Bedienbereich in den Isolationsbereich (oder ein umgekehrtes Entnehmen) zu ermöglichen, sind sogenannte Transfersysteme (auch als Rapid Transfer Port bezeichnet) bekannt. Ein solches Transfersystem weist eine Alpha-Komponente und eine funktionell damit zusammenwirkende Beta-Komponente auf. Die Alpha-Komponente umfasst einen in die Trennwand integrierten Alpha Port, der mittels einem Alpha-Flansch mit der Trennwand verbunden bzw. in diese integriert ist. Weiterhin umfasst die Alpha-Komponente eine öffen- und schließbare Alpha-Verschlusseinheit zum Öffnen und Schließen des Alpha Ports. Die Alpha-Verschlusseinheit ist schwenkbar an dem Alpha-Flansch gelagert.

Die Beta-Komponente wiederum umfasst einen Beta-Flansch und eine abnehmbare Beta-Verschlusseinheit zur Ankopplung an die Alpha-Komponente. Bei bestimmungsgemäßer Verwendung bzw. bestimmungsgemäßem Koppeln der Alpha-Komponente mit der Beta-Komponente bilden diese eine Art Schleuse, mittels welcher das Einbringen der Gegenstände in den Isolationsbereich unter Gewährleistung der dortigen Sterilität ermöglicht ist. Im gekoppelten Zustand ist die Beta-Verschlusseinheit mit der Alpha-Verschlusseinheit verbunden und mit dieser beweglich. Die Beta-Verschlusseinheit schwenkt beim Öffnen der Alpha-Verschlusseinheit also mit dieser mit.

An dem Beta-Flansch ist weiter ein Beta-Behälter angeordnet, der durch die Beta-Verschlusseinheit verschlossen ist. Der Beta-Behälter ist insbesondere formstabil. In dem Beta-Behälter sind Gegenstände platzierbar, die in den Isolationsbereich eingebracht werden sollen oder beim Entladen des Barrieresystems aus diesem entfernt werden sollen. Der Beta-Behälter weist entsprechend in seinem Inneren einen Aufnahmeraum zur Lagerung der Gegenstände auf.

Beta-Flansch und Alpha-Flansch haben festgelegte vorgegebene Größen. Verschiedene standardisierte Ausführungsgrößen sind bekannt.

Bei bekannten Transfersystemen tritt regelmäßig die Problematik auf, dass deren Aufnahmekapazität begrenzt ist und nur einzelne Objekte oder Objekte für nur einen Schritt beim Rüsten eines Barrieresystems in dem Beta-Behälter Platz finden. Nach dem Einbringen eines Objekts muss eine neue Beta-Komponente mit den weiteren im Barrieresystem benötigten Objekten angedockt und geöffnet werden. Die jeweiligen Beta-Komponenten sind sterilisiert bzw. autoklaviert. Dennoch ist ein häufiger Wechsel der angedockten Beta-Komponente nicht wünschenswert, da neben dem damit verbundenen Aufwand auch ein erhöhtes Risiko von Kontaminationen besteht.

Zur Gewährleistung der Prozesssicherheit und -effizienz besteht daher ein Bedarf an einer Möglichkeit rasch und sicher, die benötigten Objekte in das Barrieresystem einbringen zu können.

Die Aufgabe der vorliegenden Erfindung besteht darin, eine bezüglich der vorstehend erörterten Problematiken verbesserte Lösung bereitzustellen, die eine effiziente und prozesssichere Möglichkeit zur Einbringung von Objekten in ein Barrieresystem ermöglicht.

Die Aufgabe wird gelöst durch ein Transfersystem für ein Barrieresystem mit einem sterilen Isolationsbereich. Sowie durch eine Beta-Komponente für ein solches Transfersystem.

Das Barrieresystem ist durch eine Trennwand von einem nichtsterilen Bedienbereich getrennt. Das Transfersystem ist zum Transfer von Objekten aus dem Bedienbereich in den Isolationsbereich und umgekehrt ausgebildet. Das Transfersystem umfasst eine Alpha-Komponente und eine Beta-Komponente. Die Alpha-Komponente weist einen Alpha-Flansch zur Verbindung mit der Trennwand und eine öffen- und schließbare Alpha-Verschlusseinheit auf. Die Beta-Komponente weist einen Beta-Flansch und eine abnehmbare Beta-Verschlusseinheit zur Ankopplung an die Alpha-Komponente auf.

Die Beta-Komponente umfasst weiter einen, insbesondere formstabilen, Beta-Behälter mit einem Aufnahmeraum.

Es kann nun im Rahmen der Erfindung vorgesehen sein, dass in dem Aufnahmeraum der Beta-Komponente eine Magazineinrichtung angeordnet ist. Die Magazineinrichtung kann mehrere Objekte zur Überführung aus dem Aufnahmeraum durch den Beta-Flansch in den Isolationsbereich vorhalten.

Mehrere Aufnahmen, insbesondere in einer Magazineinrichtung, in der Beta-Komponente bieten den Vorteil, dass es möglich ist Wechselzeiten einzusparen, da ein An- und Abdocken einzelner Kanister bzw. Beta-Komponenten entfällt. Überdies ist das pharmazeutische Kontaminationsrisiko beim An- und Abdocken durch die zahlreichen Wechsel erhöht, was im Rahmen der Erfindung ebenfalls verbessert wird, bzw. das Risiko durch die Vermeidung zahlreicher Wechsel reduziert wird.

Die Magazineinrichtung kann wenigstens zwei Aufnahmen für Objekte umfassen, wobei die Objekte zur Überführung aus dem Aufnahmeraum durch den Beta-Flansch in den Isolationsbereich vorgesehen sind.

Die Magazineinrichtung im Aufnahmeraum bzw. im Beta-Behälter kann derart ausgebildet sein, dass jeweils eine der Aufnahmen in einer Entnahmeposition positionierbar ist, so dass in der Entnahmeposition die in der jeweiligen Aufnahme aufgenommenen Objekte zur Entnahme durch den Beta-Flansch (und den Alpha-Flansch im verbundenen Zustand) und Überführung in den Isolationsbereich positioniert sind. In der Entnahmeposition sind die in der Aufnahme vorgehaltenen Objekte derart positioniert, dass sie durch den Beta-Flansch und den Alpha-Flansch (im gekoppelten Zustand) hindurch entnommen werden können. Dabei sind sie aus dem inneren des Barrieresystems bspw. über Handschuheingriffe oder mittels eines im Barrieresystem angeordneten Roboters entnehmbar.

Insbesondere wird das der Erfindung zugrundeliegende Problem durch das Transfersystem mit den Merkmalen von Anspruch 1 und eine Beta-Komponente mit den Merkmalen von Anspruch 2 gelöst.

Die Beta-Komponente kann einen Anschluss für ein Sterilisationsmedium umfassen. Mittels des Anschlusses kann ein Sterilisationsmedium dem Aufnahmeraum zugeführt werden, um diesen und darin befindliche Objekte zu sterilisieren. Die Beta-Komponente kann weiter einen Ablauf umfassen, um Sterilisationsmedium aus dem Aufnahmeraum abzuführen.

Die Beta-Komponente kann quasi als SIP (Steam-in-Place) fähiger Canister ausgebildet sein, der intern autoklaviert werden kann. Bspw. erfolgt an einer Seite ein Anschluss von Sterildampf und Druckluft und an einer anderen Seite eine Abführung von Kondensat bzw. Abwasser, insbesondere über den oben erwähnten Ablauf.

Wenn die Beta-Komponente mit Sterildampf und Druckluft beaufschlagt wurde wird anschließend ein Autoklavierprozess (z.B. 121 °C für min. 25 min; die Verwendung anderer Prozessparameter, also Temperaturen und Verweildauern, ist hier ebenso möglich) innerhalb der Beta-Komponente durchgeführt. Die Beta-Komponente ist als druckdichtes Objekt ausgelegt.

Die Möglichkeit die Beta-Komponente gemeinsam mit den in ihr enthaltenen Objekten zu sterilisieren ist in Kombination mit der Magazineinrichtung besonders vorteilhaft. Mehrere Objekte können so zeitgleich mit der Beta-Komponente bzw. mit deren Aufnahmeraum sterilisiert werden. Weiter können die Aufnahmen bzw. die enthaltenen Gegenstände während der Sterilisation bewegt werden, was bspw. Cold-Spots vermeiden helfen kann und den Sterilisationsprozess verbessern kann.

Die Beta-Komponente kann ein Auffangbecken für Sterilisationsmedium bzw. dessen Kondensat umfassen. Ein Boden des Auffangbeckens kann ein Gefälle aufweisen, das zu einem Ablauf hin gerichtet ist, wobei das Auffangbecken insbesondere eine Bodenfläche des Aufnahmeraums bildet. Eine effiziente und vollständige Abführung des Sterilisationsmediums bzw. dessen Kondensats kann hierdurch sichergestellt werden. Der Ablauf befindet sich insbesondere an der tiefsten Stelle des Auffangbeckens. Die tiefste Stelle des Auffangbeckens bildet insbesondere die tiefste Stelle des Aufnahmeraums. Insbesondere ist der Aufnahmeraum frei von lokalen Vertiefungen ausgebildet, die nicht über ein Gefälle mit dem Ablauf verbunden sind. Ein vollständiges Abfließen von Sterilisationsmedium bzw. dessen Kondensat wird so begünstigt.

Die Magazineinrichtung kann ausgebildet sein, um die Aufnahmen der Magazineinrichtung auf einer einfachen geschlossenen Kurve zu bewegen, um sie in oder aus der Entnahmeposition zu bewegen. Dies ermöglicht eine einfache Bewegung bzw. Führung der Aufnahmen, um sie in und aus der Entnahmeposition zu bewegen. Die Kurve kann eine Kreisbahn, eine Ellipse oder eine Eilinie sein. Möglich im Sinne der Erfindung ist auch, dass die Kurve eine Rechteckform aufweist, wobei die Ecken abgerundet sein können.

Die Magazineinrichtung kann ausgebildet sein, um die Aufnahmen der Magazineinrichtung um eine Rotationsachse zu rotieren, um sie in oder aus der Entnahmeposition zu bewegen. Die Rotationsachse kann dabei horizontal oder vertikal erstreckt angeordnet sein. Eine einfache Rotationsbewegung lässt sich strukturell einfach umsetzen und stellt sicher, dass alle Aufnahmen in gleicher Art und Weise in die Entnahmeposition bewegt werden.

Die Magazineinrichtung kann ausgebildet sein, um gefüllte Aufnahmen, also Aufnahmen mit zu überführenden Objekten, auf einer ersten Seite des Beta-Flansches in einem ersten Abstand bereitzustellen und die Aufnahmen nachdem sie in der Entnahmeposition an dem Beta-Flansch positioniert waren auf eine zweite Seite des Beta-Flansch zu bewegen, welche der ersten Seite gegenüberliegt. Die Magazineinrichtung führt die Aufnahmen quasi an dem Beta-Flansch vorbei. Die Aufnahmen können auf der zweiten Seite in einem zweiten Abstand gelagert werden, der geringer als der erste Abstand ist. Die Aufnahmen können quasi nach der Entnahme der Objekte enger gestaut gelagert werden. Der Bewegungspfad der Aufnahmen kann allgemein und insbesondere in diesem Beispiel, entlang einer geraden Linie verlaufen. Eine entsprechende Führung der Aufnahmen lässt sich einfach strukturell umsetzen.

Der Beta-Flansch der Beta-Komponente kann auf einer Kopplungsseite der Beta-Komponente angeordnet sein und die Beta-Komponente kann eine verschließbare Beladeöffnung auf einer Beladeseite der Beta-Komponente aufweisen. Dabei kann die Kopplungsseite der Beladeseite insbesondere gegenüberliegend angeordnet sein. Die Kopplungsseite und die Beladeseite können jedoch auch um 90° versetzt zueinander angeordnet sein. Eine versetzte Anordnung von Kopplungsseite und Beladeseite erlaubt eine Maximierung der öffenbaren Fläche und erleichtert das Beladen.

In jeder Aufnahme kann ein ausziehbarer schubladenartiger, insbesondere austauschbarer, Einschub zur Aufnahme der zu transferierenden Objekte vorgesehen sein. Das Transfersystem kann derart ausgebildet sein, dass im miteinander verbundenen und geöffneten Zustand der Alpha-Komponente und der Beta-Komponente der Einschub derjenigen Aufnahme, welche gerade in der Entnahmeposition positioniert ist, aus dem Aufnahmeraum heraus durch den Alpha-Flansch hindurch in den Isolationsbereich hinein verlagerbar ist. Die Verwendung der Einschübe ermöglicht eine genaue und reproduzierbare Positionierung der Objekte. Austauschbare Einschübe können mit den Objekten in das Barrieresystem entnommen werden. Das begünstigt insbesondere die engere Lagerung der Aufnahmen im Anschluss an die Entnahme der Einschübe und Objekte.

Die Objekte können außerhalb der Beta-Komponente in die Einschübe platziert werden. Die Einschübe dann in die Beta-Komponente eingebracht werden. Die Beta-Komponente kann dann verschlossen werden und anschließend kann die Beta-Komponente mit Sterilisationsmedium beaufschlagt werden, um deren Innenraum und die darin platzierten Objekte und Einschübe zu sterilisieren.

Die Beta-Komponente kann fahrbar ausgebildet sein. Die Beta-Komponente kann Rollen umfassen mit denen sie bewegt werden kann. Die Position des Beta-Flansches kann gegenüber den Rollen über einen Höhenverstelleinrichtung höhenanpassbar sein. Damit kann die Beta-Komponente flexibel bewegt werden und kann bspw. an Sterilisationsmedium angeschlossen werden und anschließend an ihren Einsatzort gebracht werden. Eine Höhenanpassung ermöglicht bspw. den Anschluss an verschieden positionierte Alpha-Ports. Eine fahrbare Beta-Komponente mit Magazineinrichtung kann einfach vom Beladeort zum Einsatzort am Barrieresystem bewegt werden. Wenn die Beta-Komponente außerdem einen Anschluss für ein Sterilisationsmedium umfasst, kann sie auch zur einer Zuführstelle für Sterilisationsmedium einfach bewegt werden und von dort zum Barrieresystem. Alle Objekte können in einem Bewegungsablauf beladen, sterilisiert und anschließend in das Barrieresystem eingebracht werden.

Die Magazineinrichtung kann als Paternoster-system ausgebildet sein, so dass die Aufnahmen in dem Paternoster-system umlaufend angeordnet sind. Dadurch können die Aufnahmen effizient bewegt und platzsparend angeordnet sein. Insbesondere können flexible Geometrien an Objekten und/oder Einschüben in den Aufnahmen untergebracht werden.

Erfindungsgemäß kann vorgesehen sein, dass das Transfersystem mindestens eine einem Einschub zugeordnete Zentriereinrichtung aufweist, die in dem Isolationsbereich anordenbar oder bei bestimmungsgemäßer Verwendung des Transfersystems in dem Isolationsbereich angeordnet ist. Erfindungsgemäß weisen die Zentriereinrichtung und der Einschub jeweils mindestens ein Eingriffselement auf, wobei die Eingriffselemente an Zentriereinrichtung und Einschub derart komplementär zueinander ausgebildet sind, dass sie zum Zentrieren des Einschubs in einer Zentrierposition derart in Eingriff miteinander bringbar sind, dass der Einschub in einer Vertikalrichtung kraft- oder formschlüssig wenigstens einseitig, insbesondere beidseitig (nach oben und nach unten hin), fixiert ist. Insbesondere sind die Eingriffselemente an Zentriereinrichtung und Einschub derart komplementär zueinander ausgebildet, dass sie zum Zentrieren des Einschubs in der Zentrierposition derart in Eingriff miteinander bringbar sind, dass der Einschub auch kraft- oder formschlüssig in einer Horizontalebene in seiner Position vorpositioniert, insbesondere fixiert, ist.

Einseitig in Vertikalrichtung fixiert bedeutet im Zusammenhang mit der vorliegenden Erfindung, dass der Einschub auf der Zentriereinrichtung zumindest bereichsweise aufliegt und insofern nach unten hin abgestützt ist. Fixiert bedeutet, dass der Einschub nicht in die Zentrierposition gedrängt wird, also unter Spannung in der Zentrierposition verbleibt, sondern spannungsfrei in die Zentrierposition geführt und anschließend dort arretiert wird. Vorpositioniert in diesem Sinne ist in einer Position mit einem gewissen Spiel festgelegt, so dass in der Horizontalebene nur geringfügige Bewegungen um die festgelegte Position möglich sind.

Eine kraftschlüssige Fixierung kann beispielsweise durch eine gummierte Greifbacke bewirkt werden, die ohne zu verrutschen eine Fixierung ermöglicht.

Erfindungsgemäß ist auch ein Barrieresystem (insbesondere ein Isolator) mit einer Trennwand vorgesehen, durch welche ein steriler Isolationsbereich von einem nichtsterilen Bedienbereich trennbar bzw. getrennt ist, wobei das Barrieresystemein Transfersystem zum Transfer von Objekten aus dem Bedienbereich in den Isolationsbereich und umgekehrt aufweist. Das Barrieresystemzeichnet sich dadurch aus, dass das Transfersystem erfindungsgemäß, wie vorstehend beschrieben, ausgebildet ist, wobei die Zentriereinrichtung in dem Isolationsbereich angeordnet ist.

Die Kombination der Magazineinrichtung mit der Zentriereinrichtung ermöglicht insbesondere den zuverlässigen Einsatz eines Roboters zum Entladen bzw. Beladen der Aufnahmen mit Objekten. Die verschiedenen Einschübe können immer sicher und reproduzierbar positioniert werden, die Position der Objekte ist damit zuverlässig definiert.

Insofern ist bei bestimmungsgemäßem Gebrauch des Transfersystems die Zentriereinrichtung in dem Isolationsbereich angeordnet.

Erfindungsgemäß ist darüber hinaus eine Produktionsanlage vorgesehen, die sich dadurch auszeichnet, dass sie das vorstehend beschriebene erfindungsgemäße Barrieresystem aufweist.

Die verschiedenen Einschübe oder Aufnahmen können auf bestimmte Objekte abgestimmt sein. Bspw. kann ein Einschub oder eine Aufnahme vorgesehen sein für Formatteile, die autoklaviert eingebracht werden. Objekte können auch Sedimentationsplatten, Abklatschproben, oder andere EM-Materialien, wie Abklatschtupfer und Nährmedien, Verschlussdeckel für Wash-Down und Keimzahlköpfe oder ähnliches sein. Weiter kann ein Einschub oder eine Aufnahme vorgesehen sein für Werkezuge zur Störungsbeseitigung bspw. Werkzeuge für den Roboter, Pinzetten oder Schraubenschlüssel. Weiter kann ein Einschub oder eine Aufnahme vorgesehen sein für Greifer für den Roboter oder weitere Materialien für Probenahme, Desinfektion, Labeling.

Die Einschübe und/oder die Aufnahmen können mit Identifikationsmerkmalen versehen sein. Diese können bspw. optisch sein (bspw. Strich- oder QR-Codes). Identifikationsmerkmale können auch auf RFID-Chips oder anderen berührungslos auslesbaren Merkmalsträgern vorgehalten sein.

Die Aufnahmen oder die Einschübe können Schwenkbar in der Magazineinrichtung angeordnet sein. Insbesondere bei einer Magazineinrichtung in der die Aufnahmen rotierend angeordnet sind, kann dies ermöglichen, dass die Aufnahmen die Objekte immer horizontal lagern.

Erfindungsgemäß kann in dem Transfersystem insbesondere die Magazineinrichtung automatisiert bewegbar sein. Die Magazineinrichtung kann jedoch auch manuell bewegbar bzw. betätigbar sein bspw. über ein Handrad oder einen oder mehrere Hebel oder eine andere Betätigungseinrichtungen. Insbesondere Drehbewegungen bspw. der Magazineinrichtung bzw. der Aufnahmen in der Magazineinrichtung lassen sich vorteilhaft über ein Handrad umsetzen. Die Bewegungen der Aufnahmen können automatisch oder manuell durchführbar sein. Die Einschübe des Transfersystems können automatisch oder manuell bewegbar sein. Bspw. kann ein Einschub über einen Hebel oder ein Handrad ein- und ausfahrbar sein. Automatische Bewegungen können über bspw. Elektromotoren oder hydraulisch oder pneumatisch angetrieben umgesetzt werden.

Im Folgenden soll die Erfindung anhand der Figuren näher erläutert werden. Gleiche Elemente sind mit denselben Bezugszeichen versehen, gegebenenfalls lediglich einmal. Es zeigen:
- Figur 1: Ein bestimmungsgemäß an einem Barrieresystem angeordnetes vorteilhaftes Transfersystem in geöffnetem Zustand in einer ersten vereinfachten Darstellung;
- Figur 2: ein Teil des Transfersystems im geschlossenen Zustand beim Blick auf den Alpha-Port;
- Figur 3: ein Teil des Transfersystems im geöffneten Zustand in einer Seitenansicht;
- Figur 4: eine Variante der Beta-Komponente des Transfersystems in einer Seitenansicht;
- Figur 5: eine weitere Variante der Beta-Komponente des Transfersystems in einer Seitenansicht;
- Figur 6: eine weitere Variante der Beta-Komponente des Transfersystems in einer Draufsicht;
- Figur 7: eine weitere Variante der Beta-Komponente des Transfersystems in einer Seitenansicht;
- Figur 8: eine weitere Variante der Beta-Komponente des Transfersystems in einer Seitenansicht;
- Figur 9: eine weitere Variante der Beta-Komponente des Transfersystems in einer Seitenansicht; und
- Figur 10: eine weitere Variante der Beta-Komponente des Transfersystems in einer Seitenansicht.

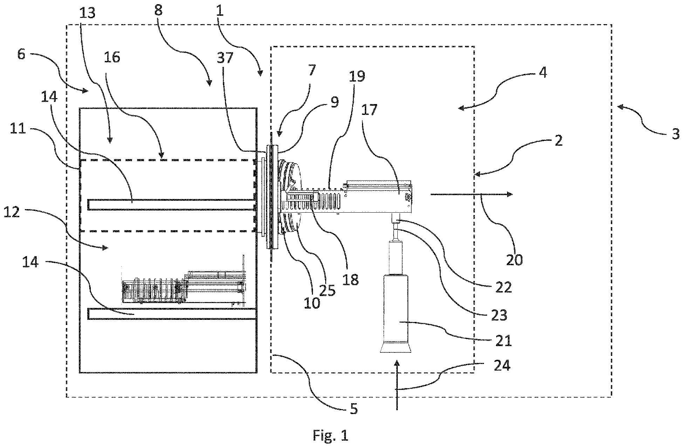

Figur 1 zeigt eine vereinfachte Darstellung eines Transfersystems 1. Das Transfersystem 1 ist zur Anordnung bzw. Montage an oder in einem vorliegend aus Übersichtlichkeitsgründen in Figur 1 nur anhand von gestrichelten Linien angedeuteten Isolator 2 (als Beispiel eines Barrieresystems; die folgenden Ausführungen an Beispielen eines Isolators sind als ebenso für andere Barrieresysteme gültig zu verstehen) vorgesehen bzw. konzipiert. Der Isolator 2 ist Teil einer vorliegend ebenfalls nur schematisch durch ein gestrichelt gezeichnetes Rechteck dargestellten Produktionsanlage 3.

Der Isolator 2 ist derart konzipiert bzw. ausgebildet, dass er eine sterile Handhabung von Produkten, beispielsweise pharmazeutischen oder medizintechnischen Erzeugnisse, ermöglicht. Zu diesem Zweck bildet der Isolator 2 einen sterilen Isolationsbereich 4 aus, der zumindest durch eine Trennwand 5 von einem nicht sterilen Bedienbereich 6 getrennt ist. Insofern weist der Isolator 2 zumindest die Trennwand 5 auf, um den sterilen Isolationsbereich 4 von den nicht sterilen Bedienbereich 6 zu trennen.

Der Isolator 2 kann noch weitere, bei bekannten gattungsgemäßen Isolatoren vorgesehene Komponenten aufweisen, die vorliegend aus Übersichtlichkeitsgründen jedoch nicht gezeigt sind.

Das Transfersystem 1 dient dazu bzw. ist dazu ausgebildet, ein Einbringen von Objekten aus dem Bedienbereich 6 in den Isolationsbereich 4 unter Beibehaltung der Sterilität in dem Isolationsbereich 4 zu ermöglichen. Zu diesem Zweck weist das Transfersystem 1 eine zur Anordnung an dem Isolator 2 bzw. dem Trennelement 5 vorgesehene Alpha-Komponente 7 und eine an die Alpha-Komponente ankoppelbare Beta-Komponente 8 auf, in welcher die zu transferierenden Objekte 15 unter sterilen Bedingungen lagerbar sind.

Die Alpha Komponente 7 weist einen Alpha-Flansch 9 auf, der, wie in Figuren 1 gezeigt ist, zur Anordnung in der Trennwand 5 vorgesehen ist bzw. bei bestimmungsgemäßem Gebrauch in die Trennwand 5 integriert ist. Weiterhin weist die Alpha-Komponente 7 eine Alpha-Verschlusseinheit 10 auf, die schwenkbar an dem Alpha-Flansch 9 gelagert ist und in eine Offen- und eine Schließstellung verbringbar ist. Vorliegend ist die Alpha-Verschlusseinheit 10 nur dann öffenbar, wenn die Beta-Komponente 8 bestimmungsgemäß an die Alpha-Komponente 7 angekoppelt ist. Ansonsten verbleibt die Alpha-Komponente 7 zur Beibehaltung der Sterilität im geschlossenen Zustand.

Die Beta-Komponente 8 weist einen Beta-Flansch 37 und eine abnehmbare Beta-Verschlusseinheit 25 auf, welche zur Ankopplung an die Alpha-Komponente 7 dienen. Die Beta Komponente 8 weist weiterhin einen vorliegend formstabilen Beta-Behälter 11 mit einem Aufnahmeraum 12 auf. Der Beta-Behälter 11 ist in Figur 1 schematisch dargestellt.

In dem Aufnahmeraum 12 der Beta-Komponente 8 ist im Sinne der Erfindung eine Magazineinrichtung 13 angeordnet ist, die wenigstens zwei Aufnahmen 14 für Objekte 15 umfasst. Die Objekte 15 sind zur Überführung aus dem Aufnahmeraum 12 durch die Alpha-Verschlusseinheit 10 in den Isolationsbereich 4 vorgesehen.

Die Magazineinrichtung 13 ist im Sinne der Erfindung derart ausgebildet, dass jeweils eine der Aufnahmen 14 in einer Entnahmeposition 16 positionierbar ist. In der Entnahmeposition 16 sind die in der Aufnahme 14 aufgenommenen Objekte 15 so positioniert, dass sie durch die Alpha-Flansch 9 (bzw. durch den Beta-Flansch 37) in den Isolationsbereich 4 überführt werden können. Bspw. kann, wie in Figur 1 illustriert, in jeder Aufnahme 14 ein schubladenartiger Einschub 17 mittels Führungsmitteln 18, die vorliegend als Führungsschienen ausgebildet sind, geführt gelagert sein. Der Einschub 17 dient dazu bzw. ist dazu ausgebildet, die zu transferierenden Objekte 19 aufzunehmen. Um den Objekttransfer durchzuführen, kann der Einschub 17 mittels der Führungsmittel 18 geführt aus dem Aufnahmeraum 12 ausgezogen werden. Der jeweilige Einschub 17 kann dabei entlang einer Entnahmerichtung 20 aus dem Beta-Behälter 11 herausgefahren werden. Das Transfersystem 1 kann derart konfiguriert sein (wie in Fig. 1 gezeigt), dass eine Aufnahme 14, die sich in der Entnahmeposition 16 befindet, derart angeordnet ist, dass der entsprechende Einschub 17 mit der Entnahmerichtung 20 fluchtet. Die Entnahmerichtung 20 erstreckt sich durch den Alpha-Flansch 9.

In dem Isolationsbereich 4 kann eine Zentriereinrichtung 21 anordenbar oder angeordnet sein. Die Zentriereinrichtung 21 und der Einschub 17 können jeweils mindestens ein Eingriffselement 22, 23 aufweisen. Die Eingriffselemente 22,23 an der Zentriereinrichtung 21 und an dem Einschub 17 können komplementär zueinander ausgebildet sein. Insbesondere können die Eingriffselemente 22, 23 derart ausgebildet sein, dass sie zum Zentrieren des Einschubs 17 in einer Zentrierposition derart in Eingriff miteinander bringbar sind, dass der Einschub 17 in einer Vertikalrichtung 24 kraft- oder formschlüssig wenigstens einseitig, insbesondere beidseitig, fixiert ist und der Einschub 17 insbesondere auch kraft- oder formschlüssig in einer Horizontalebene in seiner Position vorpositioniert, insbesondere fixiert, ist.

Das Eingriffselement 22, welches auf Seiten des Einschubs 17 angeordnet ist, kann bspw. als Zentrierhülse oder Zentriernut ausgebildet sein. Das Eingriffselement 23, welches auf Seiten der Zentriereinrichtung 21 angeordnet ist, kann bspw. als Zentrierbolzen oder Zentrierstift ausgebildet sein und komplementär zur Zentrierhülse bzw. Zentriernut geformt sein. So kann eine Abstützung in Vertikalrichtung 24 erreicht werden und eine Zentrierung in der Horizontalebene (orthogonal zur Vertikalrichtung 24). Ein Durchhängen des Einschubs 17 kann damit vermieden werden. Objekte 19 können genau positioniert und präzise und einfach automatisiert entnommen werden.

Entsprechende Eingriffselemente 22 können an mehreren, bzw. jedem, Einschub 17 der Magazineinrichtung 13 vorgesehen sein. Die Einschübe 17 lassen sich damit einheitlich positionieren.

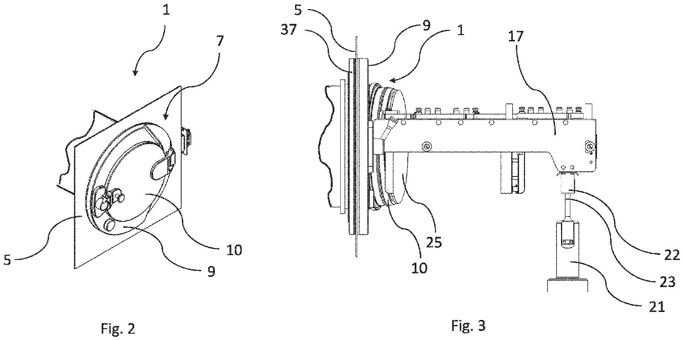

Figur 2 zeigt das Transfersystem 1 vom Isolationsbereich 4 her gesehen und in einem geschlossenen Zustand. Die Beta-Komponente 8 ist nur teilweise gezeigt, insbesondere ist der Beta-Behälter 11 nicht vollständig gezeigt, sondern nur seine Verbindung zum Beta-Flansch 37.

Figur 3 zeigt das Transfersystem 1 in einer Seitenansicht und in einem geöffneten Zustand mit ausgezogenen Einschub 17.

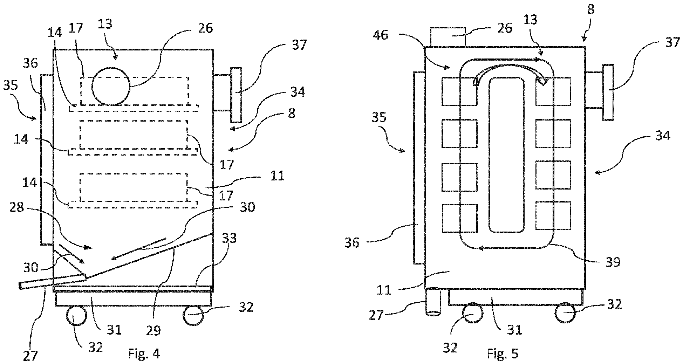

Figur 4 zeigt eine Beta-Komponente 8 eines Transfersystems 1 in einer Seitenansicht. Die Beta-Komponente 8 umfasst einen Anschluss 26 für ein Sterilisationsmedium, mittels dessen das Sterilisationsmedium dem Aufnahmeraum 12 zugeführt werden kann. Vorzugsweise dient Dampf (Wasserdampf) als Sterilisationsmedium. Auch H2O2-Dampf kann als Sterilisationsmedium in die Beta-Komponente 8 eingeführt werden. Das Sterilisationsmedium kann dem Aufnahmeraum 12 zugeführt werden, um diesen und darin befindliche Objekte 19 zu sterilisieren. Die Beta-Komponente 8 kann insbesondere einen Ablauf 27 umfassen, um Sterilisationsmedium aus dem Aufnahmeraum 12 abzuführen.

Die Beta-Komponente 8 kann ein Auffangbecken 28 für Sterilisationsmedium bzw. dessen Kondensat umfassen. Ein Boden 29 des Auffangbeckens 28 weist vorzugsweise ein Gefälle 30 (gekennzeichnet durch Pfeile) auf, wobei das Gefälle 30 zu dem Ablauf 27 hin gerichtet ist. Das Auffangbecken 28 kann insbesondere eine Bodenfläche des Aufnahmeraums 12 bilden.

Die Beta-Komponente 8 kann eine Unterkonstruktion 31 umfassen, die vom Beta-Behälter 11 abnehmbar sein kann, oder bspw. integral verbunden mit diesem ausgeführt sein kann. Die Unterkonstruktion 31 kann dem Transport der Beta-Komponente 8 dienen. Hierzu kann die Unterkonstruktion 31 Rollen 32 umfassen. Andere Ausführungen sind möglich. Bspw. kann die Unterkonstruktion 31 Eingriffe für das Ansetzen einer Hubgabel haben. Insbesondere kann die Position des Beta-Flansches 37 gegenüber den Rollen 32 und/oder der Unterkonstruktion 31 über einen Höhenverstelleinrichtung 33 höhenanpassbar sein.

Der Beta-Flansch 37 der Beta-Komponente 8 ist auf einer Kopplungsseite 34 der Beta-Komponente 8 angeordnet. Die Beta-Komponente 8 kann eine verschließbare Beladeöffnung 36 auf einer Beladeseite 35 der Beta-Komponente 8 aufweisen. Die Kopplungsseite 34 kann der Beladeseite 35 gegenüberliegend angeordnet sein, wie bspw. in den Figuren 4 und 5 gezeigt. Die Kopplungsseite 34 kann um 90° versetzt zu der Beladeseite 35 angeordnet sein.

In Figur 5 ist eine Variante einer Beta-Komponente 8 gezeigt, bei der die Aufnahmen 14 in einem Paternoster-system 46 umlaufend angeordnet sind. Die Magazineinrichtung 13 ist als Paternoster-system 46 ausgebildet, so dass die Aufnahmen 14 in dem Paternoster-system 46 umlaufend angeordnet sind und an dem Beta-Flansch 37 vorbei geführt werden können.

Die Aufnahmen 14 der Magazineinrichtung 13 werden dabei auf einer einfachen geschlossenen Kurve 39 bewegt, um sie in die oder aus der Entnahmeposition 16 zu bewegen.

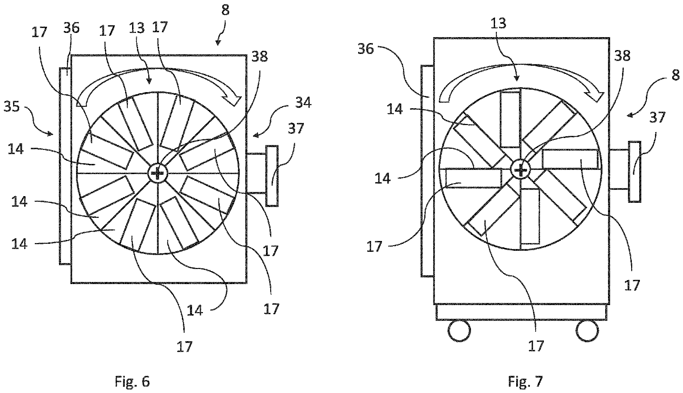

Wie in den Figuren 6 und 7 illustriert, kann die Magazineinrichtung 13 ausgebildet sein, um die Aufnahmen 14 der Magazineinrichtung 13 um eine Rotationsachse 38 zu rotieren. Durch die Rotation können die Aufnahmen 14 in die oder aus der Entnahmeposition 16 bewegt werden. In der Beta-Komponente 8, die in Figur 6 in einer Draufsicht gezeigt ist, ist die Rotationsachse 38 vertikal erstreckt. In der Beta-Komponente 8, die in Figur 7 in einer Seitenansicht gezeigt ist, ist die Rotationsachse 38 horizontal erstreckt. Die Bewegung der Aufnahmen 14 erfolgt in den vorliegenden Beispielen von Figur 6 und 7 in beiden Fällen auf einer Kreisbahn.

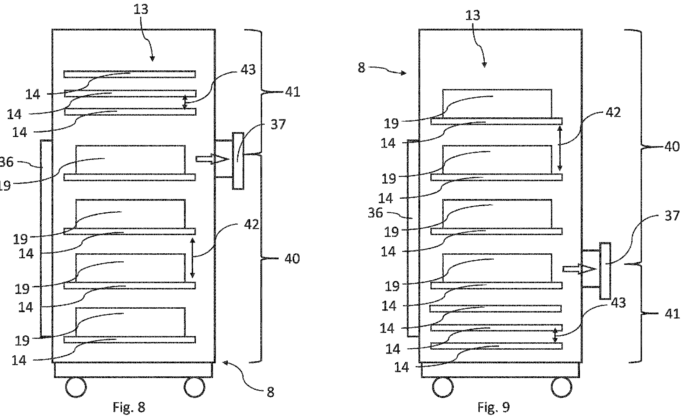

Wie in den Figuren 8 und 9 illustriert, kann die Magazineinrichtung 13 ausgebildet sein, um gefüllte Aufnahmen 14 auf einer ersten Seite 40 des Beta-Flansches 37 in einem ersten Abstand 42 bereitzustellen und die Aufnahmen 14, nachdem sie in der Entnahmeposition 16 an dem Beta-Flansch 37 positioniert waren, auf eine zweite Seite 41 des Beta-Flansches 37 zu bewegen, welche der ersten Seite 40 gegenüberliegt (vom Beta-Flansch 37 aus gesehen). Die Aufnahmen 14 werden auf der zweiten Seite 41 in einem zweiten Abstand 43 gelagert, der geringer als der erste Abstand 42 ist.

In Figur 8 ist die ersten Seite 40 unterhalb des Beta-Flansch 37. In Figur 9 ist die ersten Seite 40 oberhalb des Beta-Flansch 9.

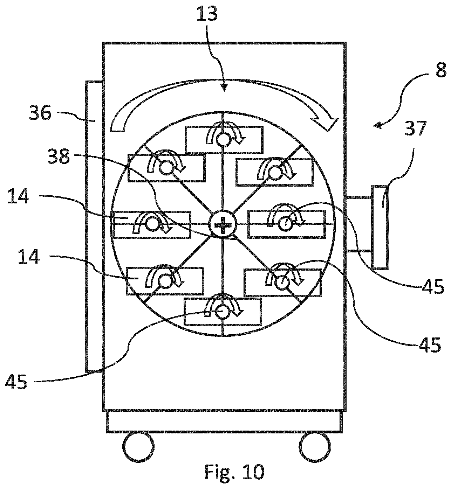

In dem Beispiel von Figur 10, ist die Magazineinrichtung 13 ausgebildet, um die Aufnahmen 14 der Magazineinrichtung 13 um eine horizontale Rotationsachse 38 zu rotieren. Die Bewegung der Aufnahmen 14 erfolgt im Beispiel von Figur 10 auf einer Kreisbahn. Die Aufnahmen sind, ähnlich wie im Paternoster-System von Figur 5, derart gelagert, dass sie Ihre Ausrichtung beibehalten während der Rotation. Sie sind also stets horizontal erstreckt angeordnet. Hierzu sind sie jeweils um eine Sekundärachse 45 schwenkbar gelagert in der Magazineinrichtung 13 aufgehängt.

## Patentansprüche

1. Transfersystem (1) für ein Barrieresystem, insbesondere einen Isolator (2), mit einem sterilen Isolationsbereich (4), der durch eine Trennwand (5) von einem nichtsterilen Bedienbereich (6) getrennt ist, wobei das Transfersystem (1) zum Transfer von Objekten aus dem Bedienbereich (6) in den Isolationsbereich (4) und umgekehrt ausgebildet ist und wobei das Transfersystem (1) eine Alpha-Komponente (7) und eine Beta-Komponente (8) umfasst, wobei die Alpha-Komponente (7) einen Alpha-Flansch (9) zur Verbindung mit der Trennwand (5) und eine öffen- und schließbare Alpha-Verschlusseinheit (10) aufweist, wobei die Beta-Komponente (8) einen Beta-Flansch (37) und eine abnehmbare Beta-Verschlusseinheit zur Ankopplung an die Alpha-Komponente (7) aufweist, wobei die Beta-Komponente (8) weiter einen, insbesondere formstabilen, Beta-Behälter (11) mit einem Aufnahmeraum (12) aufweist, **dadurch gekennzeichnet, dass** in dem Aufnahmeraum (12) der Beta-Komponente (8) eine Magazineinrichtung (13) angeordnet ist, die wenigstens zwei Aufnahmen (14) für Objekte (19) umfasst, wobei die Objekte (19) zur Überführung aus dem Aufnahmeraum (12) durch den Beta-Flansch (37) in den Isolationsbereich (4) vorgesehen sind, wobei die Magazineinrichtung (13) derart ausgebildet ist, dass jeweils eine der Aufnahmen (14) in eine Entnahmeposition (16) positionierbar ist, so dass in der Entnahmeposition (16) die in der Aufnahme (14) aufgenommenen Objekte (19) zur Entnahme durch den Beta-Flansch (37) und den Alpha-Flansch (9) und Überführung in den Isolationsbereich (4) positioniert sind.

2. Beta-Komponente (8) zur Verwendung in einem Transfersystem (1) für ein Barrieresystem, insbesondere einen Isolator (2), mit einem sterilen Isolationsbereich (4), der durch eine Trennwand (5) von einem nichtsterilen Bedienbereich (6) getrennt ist, wobei das Transfersystem (1) zum Transfer von Objekten aus dem Bedienbereich (6) in den Isolationsbereich (4) und umgekehrt ausgebildet ist und wobei das Transfersystem (1) eine Alpha-Komponente (7) und eine Beta-Komponente (8) umfasst, wobei die Alpha-Komponente (7) einen Alpha-Flansch (9) aufweist, der mit der Trennwand (5) verbunden ist und eine öffen- und schließbare Alpha-Verschlusseinheit (10) aufweist, wobei die Beta-Komponente (8) einen Beta-Flansch (37) und eine abnehmbare Beta-Verschlusseinheit zur Ankopplung an die Alpha-Komponente (7) aufweist, wobei die Beta-Komponente (8) weiter einen, insbesondere formstabilen, Beta-Behälter (11) mit einem Aufnahmeraum (12), **dadurch gekennzeichnet, dass** in dem Aufnahmeraum (12) der Beta-Komponente (8) eine Magazineinrichtung (13) angeordnet ist, die wenigstens zwei Aufnahmen (14) für Objekte (19) umfasst, wobei die Objekte (19) zur Überführung aus dem Aufnahmeraum (12) durch den Beta-Flansch (37) in den Isolationsbereich (4) vorgesehen sind, wobei die Magazineinrichtung (13) derart ausgebildet ist, dass jeweils eine der Aufnahmen (14) in einer Entnahmeposition (16) positionierbar ist, so dass in der Entnahmeposition (16) die in der Aufnahme (14) aufgenommenen Objekte (19) zur Entnahme durch den Beta-Flansch (37) angeordnet sind.

3. Transfersystem (1) nach Anspruch 1 oder Beta-Komponente (8) nach Anspruch 2, wobei die Beta-Komponente (8) einen Anschluss (26) für ein Sterilisationsmedium umfasst, mittels dessen ein Sterilisationsmedium dem Aufnahmeraum (12) zugeführt werden kann, um diesen und darin befindliche Objekte (19) zu sterilisieren, wobei die Beta-Komponente (8) insbesondere einen Ablauf (27) umfasst, um Sterilisationsmedium aus dem Aufnahmeraum (12) abzuführen.

4. Transfersystem (1) nach Anspruch 1 oder 3 oder Beta-Komponente (8) nach Anspruch 2 oder 3, wobei die Beta-Komponente (8) ein Auffangbecken (28) für Sterilisationsmedium bzw. dessen Kondensat umfasst und ein Boden (29) des Auffangbeckens (28) ein Gefälle (30) aufweist, das zu einem Ablauf (27) hin gerichtet ist, wobei das Auffangbecken (28) insbesondere eine Bodenfläche des Aufnahmeraums (12) bildet.

5. Transfersystem (1) nach Anspruch 1, 3 oder 4 oder Beta-Komponente (8) nach Anspruch 2, 3 oder 4, wobei die Magazineinrichtung (13) ausgebildet ist, um die Aufnahmen (14) der Magazineinrichtung (13) auf einer einfachen geschlossenen Kurve (39) zu bewegen, um sie in die oder aus der Entnahmeposition (16) zu bewegen.

6. Transfersystem (1) nach Anspruch 1, 3, 4 oder 5 oder Beta-Komponente (8) nach Anspruch 2, 3,4 oder 5, wobei die Magazineinrichtung (13) ausgebildet ist, um die Aufnahmen (14) der Magazineinrichtung (13) um eine Rotationsachse (38) zu rotieren, um sie in oder aus der Entnahmeposition (16) zu bewegen, insbesondere wobei die Rotationsachse (38) horizontal oder vertikal erstreckt ist.

7. Transfersystem (1) nach Anspruch 1, 3, oder 4 oder Beta-Komponente (8) nach Anspruch 2, 3 oder 4, wobei die Magazineinrichtung (13) ausgebildet ist, um gefüllte Aufnahmen (14) auf einer ersten Seite (40) des Beta-Flansches (37) in einem ersten Abstand (42) bereitzustellen und die Aufnahmen (14) nachdem sie in der Entnahmeposition (16) an dem Beta-Flansch (37) positioniert waren auf eine zweite Seite (41) des Beta-Flansch (37) zu bewegen, welche der ersten Seite (40) gegenüberliegt, wobei die Aufnahmen (14) auf der zweiten Seite (41) in einem zweiten Abstand (43) gelagert werden, der geringer als der erste Abstand (42) ist.

8. Transfersystem (1) nach einem der vorigen Ansprüche oder Beta-Komponente (8) nach einem der vorigen Ansprüche, wobei der Beta-Flansch (37) der Beta-Komponente (8) auf einer Kopplungsseite (34) der Beta-Komponente (8) angeordnet ist und die Beta-Komponente (8) eine verschließbare Beladeöffnung (36) auf einer Beladeseite (35) der Beta-Komponente (8) aufweist, insbesondere wobei die Kopplungsseite (34) der Beladeseite (35) gegenüberliegt.

9. Transfersystem (1) nach einem der vorigen Ansprüche oder Beta-Komponente (8) nach einem der vorigen Ansprüche, wobei in jeder Aufnahme (14) ein ausziehbarer schubladenartiger, insbesondere austauschbarer, Einschub (17) zur Aufnahme der zu transferierenden Objekte (19) vorgesehen ist, wobei das Transfersystem (1) derart ausgebildet ist, dass im miteinander verbundenen und geöffneten Zustand der Alpha-Komponente (7) und der Beta-Komponente (8) der Einschub (17) derjenigen Aufnahme (14), welche gerade in der Entnahmeposition positioniert ist, aus dem Aufnahmeraum (12) heraus durch den Alpha-Flansch (10) hindurch in den Isolationsbereich(4) hinein verlagerbar ist.

10. Transfersystem (1) nach einem der vorigen Ansprüche oder Beta-Komponente (8) nach einem der vorigen Ansprüche, wobei die Beta-Komponente (8) Rollen (32) umfasst mit denen sie bewegt werden kann, insbesondere wobei die Position des Beta-Flansches (37) gegenüber den Rollen (32) über einen Höhenverstelleinrichtung (33) höhenanpassbar ist.

11. Transfersystem (1) nach einem der vorigen Ansprüche oder Beta-Komponente (8) nach einem der vorigen Ansprüche, wobei die Magazineinrichtung (13) als Paternoster-system (46) ausgebildet ist, so dass die Aufnahmen (14) in dem Paternoster-system (46) umlaufend angeordnet sind.

12. Barrieresystem, insbesondere Isolator (2), mit einem Transfersystem (1) nach einem der vorigen Ansprüche, insbesondere wobei in dem Barrieresystem, insbesondere dem Isolator (2), eine Zentriereinrichtung (21) angeordnet ist.

13. Produktionsanlage (3) mit einem Barrieresystem, insbesondere einem Isolator (2), nach Anspruch 12.
